# EUROPÄISCHE PATENTSCHRIFT

(11) **EP 2 857 754 B1**
(45) Veröffentlichungstag und Bekanntmachung des Hinweises auf die Patenterteilung: **13.12.2017**
(21) Anmeldenummer: 14184203.9
(22) Anmeldetag: 10.09.2014
(51) Int. Cl.: F24C 7/08, F24C 15/04, F24C 15/06, F21V 8/00, F25D 27/00, F25D 23/02

(54) **Haushaltsgerät**
Domestic appliance
Appareil ménager

(30) Priorität: 03.10.2013 ES 201331454
(43) Veröffentlichungstag der Anmeldung: 08.04.2015
(73) Patentinhaber: BSH Hausgeräte GmbH, 81739 München (DE)
(72) Erfinder: Cebolla Royo, Jose Antonio, 50059 Spain (ES); Galindo Perez, Juan Jose, 50007 Zaragoza (ES); Grande Mainar, Maria Lourdes, 50014 Zaragoza (ES); Navarro Nasarre, Susana, 50008 Zaragoza (ES)

(56) Entgegenhaltungen:
- WO-A1-2013/053829
- DE-A1-102005 057 154
- DE-A1-102011 054 761
- DE-A1-102011 088 452
- FR-A1- 2 944 093
- US-A1- 2013 050 992

## Beschreibung

Die Erfindung betrifft ein Haushaltsgerät, insbesondere Gargerät, aufweisend eine an einer Frontseite des Haushaltsgeräts vertikal aufgestellte lichtdurchlässige Scheibe und mindestens eine Lichtquelle, die zur Einstrahlung von Licht in mindestens einen Abschnitt einer Schmalseite der Scheibe angeordnet ist. DE 102 36 211 A1 offenbart ein Kücheneinrichtungselement mit einer insgesamt aktiv oder passiv leuchtfähigen Kante oder Fläche an der Front oder in einem Innenraum oder einer Arbeitsfläche. Als leuchtfähige Kante mag eine Tür-, Schubladen- oder Korpuskante vorgesehen sein, welcher insbesondere eine lineare LED-Anordnung zugeordnet ist. Das Kücheneinrichtungselement mag als Haushaltsherd ausgebildet sein. Für den Fall, dass das Kücheneinrichtungselement als Kühlschrank mit einer Beleuchtungsanordnung zur Innenraumbeleuchtung oder zur Beleuchtung eines Eisspenders ausgebildet ist, und zwar mit einer Mehrzahl von Weißlicht-LEDs und mit mindestens einem benachbart zu den Lichtaustrittsbereichen der LEDs angeordneten Lichtdiffusor zur Verteilung des von den LEDs gerichtet emittierten Lichtes auf eine große Leuchtfläche, kann mindestens ein Tablar als flächiges Lichtleiterelement ausgebildet sein, und an mindestens einer Kante, insbesondere einer metall- oder kunststoffgefassten Vorderkante, des Tablars kann eine im Wesentlichen lineare Anordnung von Weißlicht-LEDs mit ihrer Strahlungsrichtung parallel zur Ebene des Tablars vorgesehen sein, und zwar derart, dass das über die Kante oder Kanten eingekoppelte Licht der LEDs über mindestens eine Fläche des Tablars ausgestrahlt wird.
EP 2 085 702 A2 offenbart ein Hausgerät, insbesondere ein Kochfeld, mit einer Markierung und mit einer Beleuchtungsanordnung, aufweisend eine Abdeckplatte aus einem transparenten oder semitransparenten Material und einer im Inneren und/oder auf einer Oberfläche der Abdeckplatte angebrachten Markierung und mit einer Beleuchtungsanordnung zum Hinterleuchten der Markierung. Um eine homogene Ausleuchtung der Markierung zu erreichen, wird vorgeschlagen, dass die Beleuchtungsanordnung ein Illuminationsmittel zum Hinterleuchten der Markierung von einer Rückseite der Abdeckplatte aus umfasst. Die Markierung kann als Lasergravur ausgebildet sein, insbesondere als dreidimensionale Laser-Innengravur. Die Beleuchtungsanordnung mag Mittel zum Hinterleuchten der Markierung in wenigstens zwei unterschiedlichen Farben aufweisen.

Das Hausgerät mag dazu eine Steuereinheit zum Betätigen der Beleuchtungsanordnung aufweisen, wobei die Steuereinheit dazu ausgelegt ist, eine Intensität und/oder Farbe der Beleuchtung abhängig von einem Betriebszustand des Hausgeräts zu bestimmen.

WO 2011/131340 A1 offenbart ein Kochfeld mit einer Beleuchtungsausrüstung. Das Kochfeld weist zumindest eine an der Oberseite des Kochfelds angeordnete transparente oder semitransparente Kochfeldplatte auf. Ferner umfasst das Kochfeld zumindest einen die Kochfeldplatte zumindest teilweise umschließenden Rahmen. Eine Vielzahl von Beleuchtungselementen ist innerhalb des Rahmens angeordnet, und zwar neben einer Schmalseite der Kochfeldplatte. Der Rahmen weist mindestens eine Öffnung mindestens an einer Innenseite des Rahmens auf, so dass das Kochfeld und / oder die Umgebung oberhalb des Kochfelds aus dem Rahmen heraus beleuchtet werden.

DE 10 2011 088 452 A1 offenbart ein Gaskochfeld mit einer Kochfeldplatte, welche eine umlaufende Kante und eine Öffnung zur Aufnahme von mindestens einem Gasbrenner umfasst, und mit einem unterseitig angeordneten Leuchtmittel, welches derart ausgestaltet ist, dass ein Rand der Kochfeldplatte in zumindest einem Betriebszustand des Gaskochfeldes zu einer Bedienseite hin als Leuchtbereich leuchtet.

US 2013/0050992 A1 offenbart eine planare ionenausgetauschte Glasscheibe für zur außerebenen Lichtstrahlkopplung, die umfasst: eine erste Oberfläche, einen ionenausgetauschen ersten Glasbereich benachbart und parallel zu der ersten Oberfläche, einen Kernglasbereich benachbart und parallel zu der ersten Glasbereich, einen ionenausgetauschen zweiten Glasbereich benachbart und parallel zu dem Kernglasbereich, und eine zweite Oberfläche benachbart und parallel zu dem zweiten Glasbereich. Eine Kante der Glasscheibe weist eine abgewinkelte Stirnfläche auf, die ist zu der Ebene geneigt, und zwar über eine Dicke mindestens einer der Glasregionen.

FR 2 944 093 A1 offenbart, dass ein Herd umfasst ein Gehäuse mit einer Vorderfläche aufweist. Mindestens eine zusätzliche Dekorplatte montiert auf der Vorderfläche montiert, wobei mindestens eine zusätzliche Dekorplatte außerhalb des Gehäuses angeordnet ist und mindestens eine zusätzliche Dekorplatte außerhalb des Gehäuses des Garraums angeordnet ist. Es ist mindestens eine Beleuchtungsvorrichtung vorhanden, und zwar zwischen der Vorderfläche und der mindestens einen zusätzlichen Dekorplatte, um die Außenseite des Herds zu beleuchten. Der Herd kann ein Haushaltsherd sein.

DE 10 2005 057154 A1 offenbart ein Haushaltsgerät, aufweisend eine an einer Frontseite des Haushaltsgeräts vertikal aufgestellte lichtdurchlässige Scheibe und eine Lichtquelle, die zur Einstrahlung von Licht in einen Abschnitt einer Schmalseite der Scheibe angeordnet ist.

Es ist die **Aufgabe** der vorliegenden Erfindung, die Nachteile des Standes der Technik zumindest teilweise zu überwinden und insbesondere eine Möglichkeit zur verbesserten Beleuchtung von Haushaltsgeräten bereitzustellen.

Diese Aufgabe wird gemäß den Merkmalen des unabhängigen Anspruchs gelöst. Bevorzugte Ausführungsformen sind insbesondere den abhängigen Ansprüchen entnehmbar.

Die Aufgabe wird gelöst durch ein Haushaltsgerät, aufweisend eine an einer Frontseite des Haushaltsgeräts vertikal aufgestellte lichtdurchlässige Scheibe und - mindestens eine Lichtquelle, die zur Einstrahlung von Licht in mindestens einem Lichteintritts-Kantenabschnitt der Scheibe angeordnet ist, wobei die Scheibe mindestens einen freien, frontseitig sichtbaren Lichtaustritts-Kantenabschnitt der Scheibe aufweist, der zum Auskoppeln des Lichts nach dessen innerer Totalreflexion an Seitenflächen der Scheibe eingerichtet ist.

Ein "Lichteintritts-Kantenabschnitt" ist ein Abschnitt einer Schmalseite der Scheibe, welcher zum Einstrahlen von Licht der Lichtquelle vorgesehen und eingerichtet ist. Ein "Lichtaustritts-Kantenabschnitt" ist analog ein Abschnitt einer Schmalseite der Scheibe, welcher zum Auskoppeln von Licht aus der Scheibe vorgesehen und eingerichtet ist. Dieses Haushaltsgerät weist den Vorteil auf, dass der mindestens eine Lichtaustritts-Kantenabschnitt gezielt leuchtend ausgestaltbar ist, insbesondere um eine Signalwirkung und/oder eine besonders hochwertige Anmutung zu erzeugen. Die Seitenflächen der Scheibe hingegen dienen einer Lichtleitung von dem mindestens einen Lichteintritts-Kantenabschnitt zu dem mindestens einen Lichtaustritts-Kantenabschnitt. Die Scheibe mag daher auch als ein Lichtleitkörper in Form eines TIR (Totale Innere Reflexion)-Körpers angesehen oder bezeichnet werden. Eine solche Beleuchtungsmethode ist leicht und preiswert umsetzbar.

Als Scheibe mag insbesondere jeder Körper mit einer geringen, insbesondere konstanten, Dicke gelten. Die Scheibe mag auch als Platte oder plattenförmiger Körper angesehen werden. Die Scheibe mag z.B. eine quaderförmige Scheibe bzw. eine frontseitig rechteckig geformte Scheibe sein, sie ist jedoch nicht darauf beschränkt. Die Scheibe mag eine ebene Scheibe oder eine gekrümmte Scheibe sein. Die Scheibe ist vertikal aufgestellt, und zwar insbesondere zumindest bei einem Betrieb des Haushaltsgeräts. Die Scheibe ist zusätzlich eine lichtdurchlässige Scheibe. Es ist eine Weiterbildung, dass die Scheibe eine transparente Scheibe ist. Dies ermöglicht eine gute Durchsicht durch die Scheibe ("Bild-" oder "Blickdurchlässigkeit"). Es ist auch eine Weiterbildung, dass die Scheibe eine transluzente Scheibe ist, also Objekte nur schemenhaft durch die Scheibe betrachtbar sind.

Die Art der mindestens einen Lichtquelle ist grundsätzlich nicht beschränkt. Bevorzugterweise weist die mindestens eine Lichtquelle mindestens eine Halbleiterlichtquelle auf. Bevorzugterweise umfasst die mindestens eine Halbleiterlichtquelle mindestens eine Leuchtdiode. Bei Vorliegen mehrerer Leuchtdioden (LEDs) können diese in der gleichen Farbe oder in verschiedenen Farben leuchten. Eine Farbe kann monochrom (z.B. rot, grün, blau usw.) oder multichrom (z.B. weiß) sein. Mehrere Leuchtdioden können ein Mischlicht erzeugen; z.B. ein weißes Mischlicht. Die mindestens eine Leuchtdiode kann mindestens einen wellenlängenumwandelnden Leuchtstoff enthalten (Konversions-LED). Der Leuchtstoff kann alternativ oder zusätzlich entfernt von der Leuchtdiode angeordnet sein ("Remote Phosphor"). Die mindestens eine Leuchtdiode kann in Form mindestens einer einzeln gehäusten Leuchtdiode oder in Form mindestens eines LED-Chips vorliegen. Mehrere LED-Chips können auf einem gemeinsamen Substrat ("Submount") montiert sein. Die mindestens eine Leuchtdiode kann mit mindestens einer eigenen und/oder gemeinsamen Optik zur Strahlführung ausgerüstet sein, z.B. mindestens einer Fresnel-Linse, Kollimator, und so weiter. Anstelle oder zusätzlich zu anorganischen Leuchtdioden, z.B. auf Basis von InGaN oder AllnGaP, sind allgemein auch organische LEDs (OLEDs, z.B. Polymer-OLEDs) einsetzbar. Alternativ kann die mindestens eine Halbleiterlichtquelle z.B. mindestens einen Diodenlaser aufweisen. Jedoch können grundsätzlich auch andere Lichtquellen verwendet werden wie Kompakt-Leuchtstoffröhren usw.

Die mindestens eine Lichtquelle mag mit einer Treiberelektronik zu ihrem Betrieb elektrisch verbunden sein. Die Treiberelektronik mag zusammen mit der mindestens einen Lichtquelle eine Leuchtvorrichtung bilden. Die Leuchtvorrichtung mag beispielsweise durch eine Steuereinrichtung des Haushaltsgeräts steuerbar sein, z.B. zur Einstellung einer Helligkeit und/oder einer Farbe des von der mindestens einen Lichtquelle abgestrahlten Lichts. Die Treiberelektronik mag alternativ oder zusätzlich einen Teil der Steuereinrichtung des Haushaltsgeräts darstellen bzw. eine Funktion der Steuereinrichtung sein.

Da die Kanten einer Scheibe typischerweise eine längliche Ausdehnung aufweisen, wird es bevorzugt, dass die mindestens eine Halbleiterlichtquelle an einem jeweiligen Lichteintritts-Kantenabschnitt mehrere in Reihe angeordnete Lichtquellen, insbesondere Halbleiterlichtquellen, aufweist. Die Lichtquellen mögen insbesondere auf einem gemeinsamen bandförmigen Substrat angeordnete Halbleiterlichtquellen, insbesondere Leuchtdioden, aufweisen. Das Substrat mag insbesondere eine flexible oder starre Leiterplatte sein. Solche auch als "Leuchtbänder" bezeichneten Leuchtvorrichtungen sind beispielsweise von der Firma Osram unter dem Namen "LINEARlight" erhältlich.

Die Scheibe mag einen oder mehrere Lichteintritts-Kantenabschnitte und/oder einen oder mehrere Lichtaustritts-Kantenabschnitte aufweisen. Die Scheibe mag zudem mindestens einen Kantenabschnitt aufweisen, welche weder zum Lichteintritt noch zum Lichtaustritt vorgesehen ist. Ein solcher Kantenabschnitt mag insbesondere nach innen reflektierend ausgebildet sein.

Die Scheibe mag insbesondere eine oder mehrere Aussparungen aufweisen, z.B. zur Durchführung eines oder mehrerer Bedien- und/oder Anzeigeelemente, z.B. zur Durchführung mindestens eines Bedienknebels oder Drehwahlschalters usw. Dies erhöht einen Bedienungskomfort. Der Rand oder die Kante der Aussparung mag ebenfalls als Lichtaustritts-Kantenabschnitt dienen und/oder ausgebildet sein und dadurch die Position des Anzeige- und/oder Bedienelements optisch betonen.

Es ist eine Ausgestaltung, dass die Scheibe ein Sichtfenster einer Ofentür, insbesondere Backofentür, ist. Dabei mag das Sichtfenster insbesondere eine Frontscheibe der Ofentür sein, welche die Frontseite oder Außenseite der Backofentür bildet. Diese Frontscheibe bildet folglich eine, insbesondere vollflächige, frontale oder außenseitige Abdeckung der Backofentür. Die Frontscheibe mag außerhalb eines Durchsichtbereichs z.B. an mindestens einer Seitenfläche mit einer Bedruckung versehen sein. Die Scheibe mag insbesondere in dieser Ausgestaltung einen Lichteintritts-Kantenabschnitt aufweisen, welcher einem gesamten Seitenabschnitt der Scheibe entspricht. Ist dieser Seitenabschnitt eine einer unteren Kante der Scheibe, mögen die Lichtaustritts-Kantenabschnitte dann z.B. der rechten, linken und oberen Kante der - typischerweise rechteckigen - Scheibe entsprechen.

Es ist eine alternative oder zusätzliche Ausgestaltung, dass die - insbesondere rechteckige - Scheibe eine Abdeckscheibe einer Bedienblende des Haushaltsgeräts ist. Auch hier mag die Scheibe z.B. einen unterseitigen Lichteintritts-Kantenabschnitt und links-, rechts- und oberseitige Lichtaustritts-Kantenabschnitte aufweisen.

Es ist noch eine Ausgestaltung, dass die Scheibe eine Bedienfläche eines berührempfindlichen Sensorbildschirms ist. Bestimmte lokalisierte Bereiche der Scheibe mögen dann insbesondere als Bedienfelder dienen. Dadurch kann die Scheibe eine Doppelfunktion als Leuchtelement und Bedienelement in sich vereinen, was eine besonders einfache und designtechnisch ansprechende Nutzung der Scheibe ermöglicht.

Es ist eine Weiterbildung, dass die Abdeckscheibe mindestens eine Anzeigeeinheit und/oder mindestens eine Zeichenfolge überdeckt, welche durch die Scheibe hindurch erkennbar sind.

Es ist eine weitere Ausgestaltung, dass der mindestens eine Lichteintritts-Kantenabschnitt mittels eines Dekorrahmens abgedeckt ist. Dadurch kann die mindestens eine zu diesem Lichteintritts-Kantenabschnitt zugehörige Lichtquelle auf einfache und designtechnisch ansprechende Weise vor einem Einblick von außen geschützt werden. Der Dekorrahmen mag beispielsweise einen U-förmigen Querschnitt aufweisen. Die mindestens eine Lichtquelle mag zur effektiven Lichteinstrahlung in die Scheibe insbesondere an einem Grund des U-förmigen Dekorrahmens angeordnet sein. Der Dekorrahmen mag ein umlaufender oder teilweise umlaufender Dekorrahmen sein. Der Dekorrahmen mag auch eine geradlinige Dekorschiene sein.

Es ist noch eine weitere Ausgestaltung, dass der mindestens eine Lichtaustritts-Kantenabschnitt zumindest teilweise in einer Frontrichtung oder nach vorne, insbesondere schräg nach vorne, abgeschrägt ist. Dadurch kann das an dem Lichtaustritts-Kantenabschnitt abgestrahlte Lichtbündel weiter nach vorne bzw. frontal ausgerichtet werden, was eine Sichtbarkeit für einen frontal oder schräg vor dem Haushaltsgerät positionierten Betrachter verbessert.

Jedoch mag ein Lichteintritts-Kantenabschnitt und/oder ein Lichtaustritts-Kantenabschnitt grundsätzlich beliebig geformt sein. So mag die Oberfläche der zugehörigen Kante als optisches Element dienen, z.B. zur Strahlformung. So mag der Kantenabschnitt zumindest teilweise linsenartig geformt sein, z.B. durch Ausbildung eines oder mehrerer lokaler linsenartiger Oberflächenbereiche.
Es ist auch eine Ausgestaltung, dass der Lichtaustritts-Kantenabschnitt zumindest teilweise zur Verstärkung eines Lichtaustritts ausgebildet ist. Dazu mag die Oberfläche des Lichtaustritts-Kantenabschnitts bzw. der zugehörigen Kante so ausgestaltet sein, dass sie im Vergleich zu einer unbehandelten, planen Kante einen Lichtaustritt erleichtert. So lässt sich eine Helligkeit oder ein Lichtstrom des an dem Lichtaustritts-Kantenabschnitt austretenden Lichts steigern.
Es ist eine Weiterbildung, dass der Lichtaustritts-Kantenabschnitt zur Verstärkung des Lichtaustritts zumindest bereichsweise aufgerauht ist. Die Aufrauhung unterdrückt eine innere Reflexion des Lichts und erleichtert einen Lichtaustritt. Alternativ mag der Lichtaustritts-Kantenabschnitt z.B. für die Verstärkung des Lichtaustritts beschichtet sein usw.
Es ist ferner eine Ausgestaltung, dass die Scheibe mindestens ein lokalisiertes Streuzentrum aufweist, welches insbesondere frontseitig als ein Zeichen sichtbar ist. Dies erhöht einen Bedienkomfort des Bedieners. Das mindestens eine Zeichen mag mindestens eine Markierung, mindestens ein Symbol, mindestens ein Schriftzeichen, mindestens ein Zahlzeichen usw. umfassen, z.B. einen Schriftzug oder Text. Das Streuzentrum mag beispielsweise ein holographisch wirkendes Zeichen sein. Das Streuzentrum mag beispielsweise durch eine Nachbehandlung der Scheibe erzeugt werden, z.B. mittels Laserlichts oder LED-Lichts. Das Streuzentrum mag insbesondere eine Gravur sein, insbesondere eine Lasergravur, insbesondere eine Glasinnengravur.

Es ist außerdem eine nicht zur Erfindung gehörende Ausgestaltung, dass die Scheibe aus Borosilikatglas besteht. Borosilikatglas weist den Vorteil auf, dass es hochtemperaturbeständig ist und zudem ausreichend widerstandsfähig ist, um darin Streuzentren zu erzeugen. Borosilikatglas ist insbesondere geeignet zur Verwendung mit einem Verfahren zur Herstellung einer Glasinnengravur, insbesondere mit Laserlicht oder LED-Licht. Die Hochtemperaturbeständigkeit ist besonders vorteilhaft auch bei einer Verwendung als Sichtfenster eines Ofens, insbesondere Backofens. Jedoch kann auch jedes andere geeignete Glas verwendet werden. Zudem ist die Scheibe nicht auf die Verwendung von Glas als Grundmaterial beschränkt, sondern mag z.B. auch Kunststoff, z.B. PMMA, PC und/oder ABS aufweisen. Die Scheibe mag auch aus Glaskeramik bestehen.

Es ist darüber hinaus eine Ausgestaltung der Erfindung, dass die mindestens eine Lichtquelle dazu ausgestaltet ist, Licht unterschiedlicher Farbe in die Scheibe einzustrahlen. Dadurch kann einem Nutzer eine farblich angepasste oder variable Lichtabstrahlung an dem mindestens einen Lichtaustritts-Kantenabschnitt dargeboten werden. Ein Nutzer mag so z.B. eine von ihm gewünschte Farbe eigenständig anpassen.

Es ist eine weitere Ausgestaltung davon, dass das Haushaltsgerät dazu eingerichtet ist, mittels der mindestens einen Lichtquelle Licht in die Scheibe einzustrahlen, welches Licht eine in Abhängigkeit mindestens eines Zustands des Haushaltsgeräts eingestellte Farbe aufweist. Dadurch kann einem Nutzer auf einfache und intuitiv erfassbare Weise mindestens ein Zustand des Haushaltsgeräts angezeigt werden, insbesondere auch auf größere Entfernung. In anderen Worten sind vorbestimmte Zustände des Haushaltsgeräts an dem mindestens einen Lichtaustritts-Kantenabschnitt farbkodiert anzeigbar. Beispielsweise mag ein Fehlerzustand oder ein drohender Fehlerzustand durch eine Einstrahlung roten Lichts in die Scheibe angezeigt werden.
Es ist eine Weiterbildung, dass das Haushaltsgerät dazu eingerichtet ist, mittels der mindestens einen Lichtquelle Licht in die Scheibe einzustrahlen, welches Licht eine in Abhängigkeit mindestens eines Zustands des Haushaltsgeräts eingestellte Helligkeit aufweist. Auch so mag einem Nutzer auf einfache und intuitiv erfassbare Weise mindestens ein Zustand des Haushaltsgeräts angezeigt werden. Die Helligkeit mag insbesondere zeitlich variiert sein, so dass an dem mindestens einen Lichtaustritts-Kantenabschnitt Licht blinkend abgestrahlt wird. Beispielsweise mag ein Fehlerzustand oder ein drohender Fehlerzustand durch eine blinkende Einstrahlung von Licht in die Scheibe angezeigt werden. Die mindestens eine Lichtquelle mag dazu insbesondere dimmbar sein und/oder blinkend betreibbar sein.
Es ist eine Weiterbildung, dass die Farbe des von der mindestens einen Lichtquelle abgestrahlten Lichts (und damit aus des in die Scheibe eingestrahlten und dann an dem mindestens einen Lichtaustritts-Kantenabschnitt abgestrahlten Lichts) sprunghaft zwischen zwei oder mehr - bunten und/oder unbunten - Farben wechselt, z.B. zwischen den Farben "rot", "grün" "blau" und/oder "weiß".

Es ist noch eine Weiterbildung, dass die Farbe des von der mindestens einen Lichtquelle abgestrahlten Lichts kontinuierlich oder quasi-kontinuierlich (d.h. mit geringen aufeinanderfolgenden Farbschritten, die durch einen Nutzer nicht oder kaum wahrnehmbar sind) umschaltbar oder einstellbar ist.

Der Zustand des Haushaltsgeräts mag ein Betriebszustand (z.B. "Ein / Aus", "Im Betrieb", "Fertig" usw.), ein Fehlerzustand (z.B. "Rauchentwicklung", "Überhitzung" usw.) oder ein anderer Zustand (z.B. "Serviceintervall abgelaufen", "Bitte Reinigen", "Bitte abtauen" usw.) des Haushaltsgeräts sein.

Es ist auch eine Ausgestaltung, dass der Zustand des Haushaltsgeräts eine Garraumtemperatur, insbesondere Backofentemperatur, ist. Die Farbe des von der mindestens einen Lichtquelle abgestrahlten Lichts ist also in Abhängigkeit von der Garraumtemperatur einstellbar. So kann einem Nutzer auf einfache und intuitiv verständliche Weise ein Gefühl für den Wert der Garraumtemperatur angezeigt werden. Insbesondere mag die Farbe des von der mindestens einen Lichtquelle abgestrahlten Lichts insbesondere in Abhängigkeit von der Garraumtemperatur kontinuierlich, quasi-kontinuierlich oder in mehreren größeren Schritten (z.B. entsprechend einer Änderung der Garraumtemperatur um 5°C oder 10°C) erfolgen. Beispielsweise mag sich die Farbe von einer geringeren Backofentemperatur zu einer höheren Garraumtemperatur von "rot" nach "gelb" ändern, ggf. über die Farbe "orange".

Es ist eine Weiterbildung, dass das Licht erst dann in Abhängigkeit von der Garraumtemperatur farbkodiert erzeugt, in die Scheibe eingestrahlt oder von der Scheibe abgestrahlt wird, wenn die Garraumtemperatur einen vorbestimmten Schwellwert ("Sicherheitsschwellwert") erreicht oder überschritten hat, z.B. einen Sicherheitsschwellwert von 50°C. Umgekehrt mag das Licht erst dann nicht mehr in Abhängigkeit von der Garraumtemperatur farbkodiert erzeugt werden, wenn der Sicherheitsschwellwert erreicht oder unterschritten wird. Unterhalb des Sicherheitsschwellwert mag z.B. Licht einer gleichen Farbe eingestrahlt werden, z.B. weiß oder blau.

Das Haushaltsgerät mag insbesondere ein Gargerät sein, insbesondere ein Ofen oder ein Herd sein oder aufweisen. Der Ofen mag z.B. ein Backofen, ein Mikrowellenofen, ein Dampfgargerät oder eine beliebige Kombination daraus sein. Jedoch ist das Haushaltsgerät nicht darauf beschränkt und mag z.B. auch andere Haushaltsgroßgeräte wie Kühlgeräte (Kühlschrank, Kühltruhe usw.) oder Wäschebehandlungsgeräte (Waschmaschine, Wäschetrockner usw.) sowie Haushaltskleingeräte umfassen.

Das Haushaltsgerät mag beispielsweise ein Einbaugerät oder ein einzeln stehendes Gerät sein.

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden schematischen Beschreibung von Ausführungsbeispielen, die im Zusammenhang mit den Zeichnungen näher erläutert werden. Dabei können zur Übersichtlichkeit gleiche oder gleichwirkende Elemente mit gleichen Bezugszeichen versehen sein.
- Fig.1: zeigt als Schnittdarstellung in Seitenansicht eine lichtdurchlässige Scheibe mit einer Lichtquelle zur kantenseitigen Lichteinstrahlung in die Scheibe eines Haushaltsgeräts gemäß einem ersten Ausführungsbeispiel;
- Fig.2: zeigt als Schnittdarstellung in Seitenansicht eine lichtdurchlässige Scheibe mit einer Lichtquelle zur kantenseitigen Lichteinstrahlung in die Scheibe eines Haushaltsgeräts gemäß einem zweiten Ausführungsbeispiel; und
- Fig.3: zeigt das Haushaltsgerät aus Fig.2 in Frontalansicht.

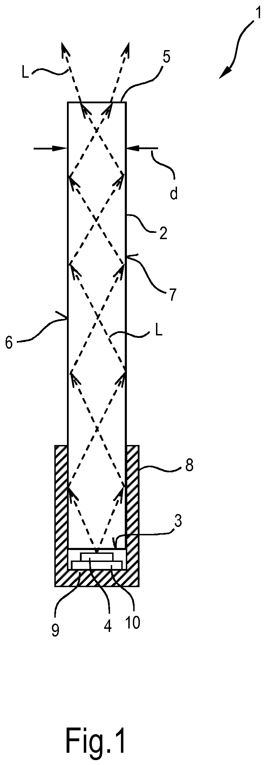

**Fig.1** zeigt als Schnittdarstellung in Seitenansicht Teile eines Haushaltsgeräts 1, nämlich eine lichtdurchlässige Scheibe 2 mit einer als Lichteintritts-Kantenabschnitt 3 dienenden unteren Kante sowie eine Lichtquelle in Form einer LED 4 zur Abgabe und Einstrahlung von Licht L in die Scheibe 2 durch den Lichteintritts-Kantenabschnitt 3.

Die Scheibe 2 ist hier eine transparente, quaderförmige Scheibe. Sie weist eine im Vergleich zu einer Ausdehnung in der hier senkrecht zur Bildebene liegenden Scheibenebene geringe, konstante Dicke d auf. Die Scheibe 2 mag insbesondere an einer Frontseite des Haushaltsgeräts 1 angeordnet sein. Die Scheibe 2 mag z.B. aus widerstandfähigem Borosilikatglas bestehen.

Eine obere Kante oder Kantenabschnitt der Scheibe 2 dient als Lichtaustritts-Kantenabschnitt 5, durch welchen Licht L aus der Scheibe 2 austreten kann. Der Lichtaustritts-Kantenabschnitt 5 ist für einen frontseitig positionierten Betrachter sichtbar, insbesondere von schräg oben. Auch die nicht gezeigten linksseitigen und rechtsseitigen Kanten oder Kantenabschnitte der Scheibe 2 sind rein beispielhaft als Lichtaustritts-Kantenabschnitte vorgesehen und eingerichtet. Um einen effektiven oder verstärkten Lichtaustritt aus den Lichtaustritts-Kantenabschnitten 5 zu erreichen, sind diese aufgerauht, was eine Rückflexion in das Innere der Scheibe 2 durch interne Totalreflexion unterdrückt. Eine frontseitige Seitenfläche 6 und eine rückseitige Seitenfläche 7 der Scheibe 2 sind hingegen glatt, um eine interne Totalreflexion des Lichts L daran effektiv zu gestalten.

An dem unteren Lichteintritts-Kantenabschnitt 3 ist die Scheibe 2 mittels eines Dekorrahmens 8 abgedeckt. Der Dekorrahmen 8 ist als ein U-förmiges, sich senkrecht zur Bildebene erstreckendes Profil oder Schiene ausgebildet, z.B. aus Kunststoff oder Metall. Ein Boden 9 des Dekorrahmens 8 ist beabstandet zu dem Lichteintritts-Kantenabschnitt 3 angeordnet und trägt die LEDs 4. Dazu sind mehrere LEDs 4 in einer sich senkrecht zur Bildebene erstreckenden Reihe angeordnet, und zwar auf einem Substrat in Form einer bandförmigen Leiterplatte 10. Die Leiterplatte 10 mit den darauf angeordneten LEDs 4 mag als einheitliches Leuchtband 4, 10 käuflich erhältlich sein. Die LEDs 4 mögen gleichfarbige, z.B. weiße, LEDs sein oder mögen Gruppen verschiedenfarbiger LEDs umfassen, welche in Summe z.B. weißes Mischlicht L aber auch farbiges Licht L erzeugen können. Die LEDs 4 strahlen bei ihrem Betrieb das von ihnen emittierte Licht L durch den unteren Lichteintritts-Kantenabschnitt 3 in die Scheibe 2 ein. Der Dekorrahmen 8 mag zur Verringerung von Lichtverlusten innenseitig reflektierend ausgestaltet sein. Der Dekorrahmen 8 dient folglich als Träger für das Leuchtband 4, 10, als mechanischer Schutz und als Blickschutz.

Die LEDs 4 mögen über die Leiterplatte 10 mit einer Steuereinrichtung des Haushaltsgeräts 1 verbunden sein, um z.B. deren Betriebsstrom einstellen zu können. Bei LEDs 4 ist der Betriebsstrom meist proportional zum emittierten Lichtstrom. Auf der Leiterplatte 10 oder damit verbunden mag eine Treiberelektronik (o. Abb.) zum Betreiben der LEDs 4, insbesondere zur Einstellung eines Betriebsstroms und/oder einer Betriebsspannung der LEDs 4, vorhanden sein.

Bei einer Aktivierung der LEDs 4, z.B. automatisch über die Steuereinrichtung, emittieren diese das Licht L, und zwar auf den unteren Lichteintritts-Kantenabschnitt 3, Das Licht L tritt dann durch den unteren Lichteintritts-Kantenabschnitt 3 in die Scheibe 2 ein und wird in der Scheibe 2 durch innere Totalreflexion an den Seitenflächen 6 und 7 geführt. Trifft das Licht L auf einen Lichtaustritts-Kantenabschnitt 5, wird es dort ausgekoppelt. Dabei mag es zu einer geringfügigen Lichtauskopplung auch an den Seitenflächen 6 und ggf. 7 der Scheibe 2 kommen.

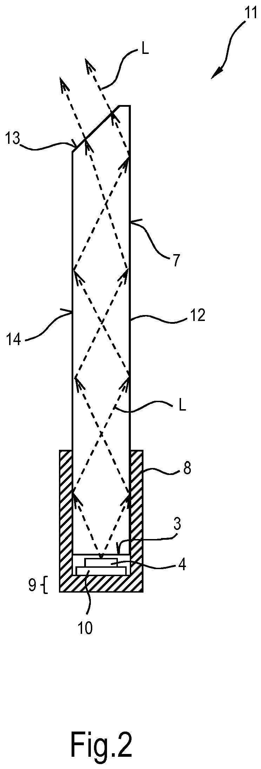

**Fig.2** zeigt als Schnittdarstellung in Seitenansicht Teile eines Haushaltsgeräts 11 ähnlich zu Fig.1. Im Gegensatz zu dem Haushaltsgerät 1 aus Fig.1 sind die Lichtaustritts-Kantenabschnitte, von denen hier nur der obere Lichtaustritts-Kantenabschnitt 13 gezeigt ist, nach vorne bzw. in einer Frontrichtung angeschrägt. Dies lässt sich z.B. durch eine Verkürzung der frontseitigen Seitenfläche 14 der Scheibe 12 erreichen. Dadurch wird das aus den Lichtaustritts-Kantenabschnitten 13 ausgekoppelte Licht L stärker nach vorne abgestrahlt, was eine Sichtbarkeit für einen frontal oder schräg vor dem Haushaltsgerät 11 positionierten Betrachter verbessert.

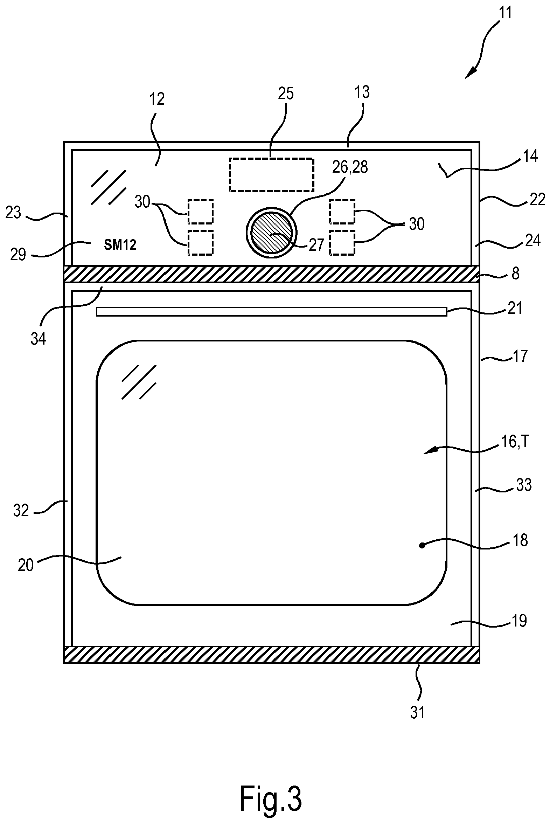

**Fig.3** zeigt das Haushaltsgerät 11 aus Fig.2 in Frontalansicht. Das Haushaltsgerät 11 ist hier als ein Einbau-Backofen ausgebildet und weist dazu eine einen Garraum 16 verschließende frontseitige Garraumtür 17 auf. Die Garraumtür 17 ist frontal vollflächig durch eine Sichtscheibe 18 abgedeckt, die an ihrem Rand eine blickundurchlässige Bedruckung 19 aufweist, aber einen zentralen Sichtbereich 20 zur Einsicht in den Garraum 16 aufweist. Die Garraumtür 17 lässt sich mittels eines Türgriffs 21 handhaben.

Oberhalb der Garraumtür 17 befindet sich eine Bedienblende 22. Die Bedienblende 22 ist hier beispielhaft frontseitig durch die beleuchtete Scheibe 12 gemäß Fig.2 abgedeckt. Folglich wird bei einer Aktivierung der LEDs 4 Licht L vor allem aus dem oberen Lichtaustritts-Kantenabschnitt 13 sowie aus einem ebenfalls nach vorne abgeschrägten linksseitigen Lichtaustritts-Kantenabschnitt 23 und rechtsseitigen Lichtaustritts-Kantenabschnitt 24 nach vorne abgegeben. Da die Scheibe 12 transparent ist, lässt sich eine hinter der Scheibe 12 angeordnete Anzeigeeinrichtung 25, z.B. ein LED- oder ein LCD-Display, weiterhin einfach ablesen.

Die Scheibe 12 weist zudem eine kreisförmige Aussparung 26 zur Durchführung eines Drehwahlschalters 27 auf. Der zugehörige Rand 28 der Aussparung 26 mag ebenfalls als Lichtaustritts-Kantenabschnitt dienen.

Das Haushaltsgerät 11 ist insbesondere so ausgestaltet, dass die LEDs 4 Licht L unterschiedlicher Farbe in die Scheibe 12 einstrahlen können, beispielsweise in Abhängigkeit von einer in dem Garraum 16 herrschenden Garraumtemperatur bzw. Backofentemperatur T. So mögen die Lichtaustritts-Kantenabschnitte 13, 23 und 24 sowie ggf. 28 beispielsweise rotes Licht bei niedrigeren Backofentemperaturen T und orangefarbenes und/oder gelbes Licht bei höheren Backofentemperaturen T abstrahlen. Liegt die Backofentemperatur T unterhalb eines vorbestimmten Sicherheitsschwellwerts, mag z.B. weißes oder blaues Licht abgestrahlt werden. Nach Beendigung eines Garablaufs, z.B. nach Ablauf eines Garprogramms und/oder einer voreingestellten Gardauer, mag das Licht L beispielsweise blinkend abgestrahlt werden, um einem Nutzer oder Bediener einen Hinweis aus den beendeten Garvorgang zu geben.

Die Scheibe 12 weist zudem mindestens ein lokalisiertes Streuzentrum auf, nämlich hier vier Streuzentren 29 in Form von zwei Schriftzeichen "S" und "M" sowie zwei Zahlzeichen "1" und "2", die zusammen die Zeichenfolge "SM12" ergeben. An den Streuzentren 29 wird das in der Scheibe 12 laufende Licht L gestreut und dadurch mit einem größeren Winkel zu den Seitenflächen 6 bzw. 7 auf diese Seitenflächen 6, 7 gelenkt. Dadurch werden diese Streuzentren 29 für einen frontseitig positionierten Nutzer oder Betrachter als helle Zeichenfolge "SM12" auf grundsätzlich bekannt Weise sichtbar. Die Streuzentren 29 liegen insbesondere als eine Glasinnengravur vor.

Die Scheibe 12 dient darüber hinaus als eine Bedienfläche eines berührempfindlichen (z.B. resistiven, kapazitiven oder induktiven) Sensorbildschirms und weist dazu lokalisierte Bereiche 30 auf, die als Tast-Bedienfelder wirken.

Die Sichtscheibe 18 der Garraumtür 17 kann ebenfalls als kantenleuchtende Scheibe ausgebildet sein, und zwar analog zu der Scheibe 12. Dazu mag die Sichtscheibe 18 z.B. ebenfalls an ihrem unteren Kantenabschnitt eine Dekorschiene 31 aufweisen, welche LEDs verdeckt, die Licht L durch einen als Lichteintritts-Kantenabschnitt dienenden unteren Kantenabschnitt einstrahlen. Als Lichtaustritts-Kantenabschnitte können dann z.B. ein linksseitiger Kantenabschnitt 32, ein rechtsseitiger Kantenabschnitt 33 und ein oberseitiger Kantenabschnitt 34 dienen. Das in die Scheiben 12 und 18 eingestrahlte Licht mag zumindest zeitweise, ggf. bei Aktivierung der LEDs auch dauernd, eine gleiche und/oder eine unterschiedliche Farbe und/oder unterschiedliche zeitliche Varianz aufweisen. Selbstverständlich ist die vorliegende Erfindung nicht auf die gezeigten Ausführungsbeispiele beschränkt und ist durch die Ansprüche definiert. Allgemein kann unter "ein", "eine" usw. eine Einzahl oder eine Mehrzahl verstanden werden, insbesondere im Sinne von "mindestens ein" oder "ein oder mehrere" usw., solange dies nicht explizit ausgeschlossen ist, z.B. durch den Ausdruck "genau ein" usw.
Auch kann eine Zahlenangabe genau die angegebene Zahl als auch einen üblichen Toleranzbereich umfassen, solange dies nicht explizit ausgeschlossen ist.

### Bezugszeichenliste

- 1: Haushaltsgerät
- 2: Scheibe
- 3: Lichteintritts-Kantenabschnitt
- 4: LED
- 5: Lichtaustritts-Kantenabschnitt
- 6: frontseitige Seitenfläche
- 7: rückseitige Seitenfläche
- 8: Dekorrahmen
- 9: Boden
- 10: Leiterplatte
- 11: Haushaltsgerät
- 12: Scheibe
- 13: Lichtaustritts-Kantenabschnitt
- 14: frontseitige Seitenfläche
- 16: Garraum
- 17: Garraumtür
- 18: Sichtscheibe
- 19: blickundurchlässige Bedruckung
- 20: zentraler Sichtbereich
- 21: Türgriff
- 22: Bedienblende
- 23: linksseitiger Lichtaustritts-Kantenabschnitt
- 24: rechtsseitiger Lichtaustritts-Kantenabschnitt
- 25: Anzeigeeinrichtung
- 26: kreisförmige Aussparung
- 27: Drehwahlschalter
- 28: Rand
- 29: Streuzentrum
- 30: lokalisierter Bereich
- 31: Dekorschiene
- 32: linksseitiger Kantenabschnitt
- 33: rechtsseitiger Kantenabschnitt
- 34: oberseitige Kantenabschnitt
- d: Dicke
- L: Licht
- SM12: Zeichenfolge
- T: Backofentemperatur

## Patentansprüche

1. Haushaltsgerät (1; 11), aufweisend
- eine an einer Frontseite des Haushaltsgeräts (1; 11) vertikal aufgestellte lichtdurchlässige Scheibe (2; 12, 18) und
- mindestens eine Lichtquelle (4), die derart angeordnet ist, dass die Lichtquelle (4) in mindestens einen Abschnitt (3) einer Schmalseite der Scheibe (2; 12, 18) Licht (L) einstrahlt, **dadurch gekennzeichnet, dass**
- die Scheibe (2; 12, 18) mindestens einen freien, frontseitig sichtbaren Abschnitt (5; 13, 23, 24, 28, 32-34) der Schmalseite der Scheibe (2; 12, 18) aufweist, der zum Auskoppeln des Lichts (L) der Lichtquelle (4) nach dessen innerer Totalreflexion an Seitenflächen (6, 7) der Scheibe (2; 12, 18) eingerichtet ist.

2. Haushaltsgerät (1; 11) nach Anspruch 1, **dadurch gekennzeichnet, dass** die Scheibe (2; 12, 18) ein Sichtfenster (18) einer Backofentür (17) ist.

3. Haushaltsgerät (1; 11) nach einem der vorhergehenden Ansprüche, **dadurch gekennzeichnet, dass** die Scheibe (2; 12, 18) eine Abdeckscheibe (2; 12) einer Bedienblende (22) des Haushaltsgeräts (1; 11) ist.

4. Haushaltsgerät (1; 11) nach Anspruch 3, **dadurch gekennzeichnet, dass** die Scheibe (2; 12) eine Bedienfläche (30) eines berührempfindlichen Sensorbildschirms der Bedienblende (22) ist.

5. Haushaltsgerät (1; 11) nach einem der vorhergehenden Ansprüche, **dadurch gekennzeichnet, dass** der mindestens eine zur Einstrahlung des Licht (L) vorgesehene Abschnitt (3) der Schmalseite der Scheibe (2; 12, 18) (3) mittels eines Dekorrahmens (8) abgedeckt ist.

6. Haushaltsgerät (1; 11) nach Anspruch 2, **dadurch gekennzeichnet, dass** die zur Einstrahlung des Lichts (L) vorgesehene Schmalseite der Scheibe (2; 12, 18) einem gesamten Seitenabschnitt der Scheibe (2; 12, 18) entspricht.

7. Haushaltsgerät (1; 11) nach Anspruch 3, **dadurch gekennzeichnet, dass** die zur Einstrahlung des Lichts (L) vorgesehene Schmalseite der Scheibe (2; 12, 18) einer unteren Schmalseite der Scheibe (2; 12, 18) entspricht und die zur Auskopplung des Lichts (L) vorgesehene Schmalseite der Scheibe (2; 12, 18) einer oberen Schmalseite der Scheibe (2; 12, 18), einer linksseitigen und einer rechtsseitigen Schmalseite der Scheibe (2; 12,18) entspricht.

8. Haushaltsgerät (11) nach einem der vorhergehenden Ansprüche, **dadurch gekennzeichnet, dass** der zur Auskopplung des Lichts (L) vorgesehene Abschnitt (13, 23, 24, 28, 32-34) der Schmalseite der Scheibe (2; 12, 18) zumindest teilweise in einer Frontrichtung abgeschrägt ist.

9. Haushaltsgerät (1; 11) nach einem der vorhergehenden Ansprüche, **dadurch gekennzeichnet, dass** der zur Auskopplung des Lichts (L) vorgesehene Abschnitt (5; 13, 23, 24, 28, 32-34) zumindest teilweise zur Verstärkung eines Lichtaustritts ausgebildet ist.

10. Haushaltsgerät (1; 11) nach einem der vorhergehenden Ansprüche, **dadurch gekennzeichnet, dass** die Scheibe (2; 12, 18) mindestens ein lokalisiertes Streuzentrum (29) aufweist, welches frontseitig als ein Zeichen sichtbar ist.

11. Haushaltsgerät (1; 11) nach einem der vorhergehenden Ansprüche, **dadurch gekennzeichnet, dass** die mindestens eine Lichtquelle (4) mindestens eine Halbleiterlichtquelle aufweist.

12. Haushaltsgerät (1; 11) nach einem der vorhergehenden Ansprüche, **dadurch gekennzeichnet, dass** die mindestens eine Lichtquelle (4) dazu ausgestaltet ist, Licht (L) unterschiedlicher Farbe in die Scheibe (2; 12, 18) einzustrahlen.

13. Haushaltsgerät (1; 11) nach Anspruch 12 **dadurch gekennzeichnet, dass** das Haushaltsgerät (1; 11) dazu eingerichtet ist, mittels der mindestens einen Lichtquelle (4) Licht (L) in die Scheibe (2; 12, 18) einzustrahlen, welches Licht (L) eine in Abhängigkeit eines Zustands des Haushaltsgeräts (1; 11) eingestellte Farbe aufweist.

14. Haushaltsgerät (1; 11) nach Anspruch 13, **dadurch gekennzeichnet, dass** der Zustand des Haushaltsgeräts (1; 11) eine Backofentemperatur (T) ist.

## Claims

1. Domestic appliance (1;11) having
- a light-permeable disc (2; 12, 18) placed vertically on a front face of the domestic appliance (1; 11) and
- at least one light source (4), which is arranged such that the light source (4) radiates light (L) into at least one section (3) of a narrow side of the disc (2; 12, 18) **characterised in that**
- the disc (2; 12, 18) has at least one free section (5; 13, 23, 24, 28, 32-34) of the narrow side of the disc (2; 12, 18) which is visible on a front face and which is configured to outcouple the light (L) of the light source (4) after its inner total reflection onto lateral surfaces (6, 7) of the disc (2; 12, 18).

2. Domestic appliance (1; 11) according to claim 1, **characterised in that** the disc (2; 12, 18) is a window (18) of an oven door (17).

3. Domestic appliance (1; 11) according to one of the preceding claims, **characterised in that** the disc (2; 12, 18) is a cover disc (2; 12) of a control panel (22) of the domestic appliance (1; 11).

4. Domestic appliance (1; 11) according to claim 3, **characterised in that** the disc (2; 12) is a control panel (30) of a touch-sensitive screen of the control panel (22).

5. Domestic appliance (1; 11) according to one of the preceding claims, **characterized in that** the at least one section (3) of the narrow side of the disc (2; 12, 18) which is provided to irradiate light (L) is covered by means of a decorative frame (8).

6. Domestic appliance (1; 11) according to claim 2, **characterised in that** the narrow side of the disc (2; 12, 18) provided to irradiate the light (L) corresponds to an overall lateral section of the disc (2; 12, 18).

7. Domestic appliance (1; 11) according to claim 3, **characterised in that** the narrow side of the disc (2; 12, 18) provided to irradiate light (L) corresponds to a lower narrow side of the disc (2; 12, 18) and the narrow side of the disc (2; 12, 18) provided to outcouple light (L) corresponds to an upper narrow side of the disc (2; 12, 18) of a left-side and a right-side narrow side of the disc (2; 12, 18).

8. Domestic appliance (11) according to one of the preceding claims, **characterised in that** the section (13, 23, 24, 28, 32-34) of the narrow side of the disc (2; 12, 18) provided to outcouple the light (L) is at least partially tapered in a front direction.

9. Domestic appliance (1; 11) according to one of the preceding claims, **characterised in that** the section (5; 13, 23, 24, 28, 32-34) provided to outcouple the light (L) is embodied at least partially to reinforce a light emission.

10. Domestic appliance (1; 11) according to one of the preceding claims, **characterised in that** the disc (2; 12, 18) has at least one localised scattering centre (29) which is visible on the front face as a sign.

11. Domestic appliance (1; 11) according to one of the preceding claims, **characterised in that** the at least one light source (4) has at least one semiconductor light source.

12. Domestic appliance (1; 11) according to one of the preceding claims, **characterised in that** the at least one light source (4) is designed to irradiate light (L) of a different colour into the disc (2; 12, 18).

13. Domestic appliance (1; 11) according to claim 12, **characterised in that** the domestic appliance (1; 11) is configured to irradiate light (L) into the disc (2; 12, 18) using the at least one light source (4), which light (L) has a colour which is adjusted as a function of a state of the domestic appliance (1; 11).

14. Domestic appliance (1; 11) according to claim 13, **characterised in that** the state of the domestic appliance (1; 11) is an oven temperature (T).

## Revendications

1. Appareil ménager (1 ; 11) présentant
- une vitre (2 ; 12, 18) perméable à la lumière, posée verticalement sur un côté frontal de l'appareil ménager (1 ; 11), et
- au moins une source lumineuse (4) qui est disposée de manière à ce que la source lumineuse (4) émette de la lumière (L) dans au moins une section (3) d'un côté étroit de la vitre (2 ; 12, 18),
**caractérisé en ce que**
- la vitre (2 ; 12, 18) présente au moins une section (5 ; 13, 23, 24, 28, 32 - 34) libre, visible côté frontal, du côté étroit de la vitre (2 ; 12, 18), laquelle est configurée pour découpler la lumière (L) de la source lumineuse (4) après la réflexion totale interne de la lumière sur des surfaces latérales (6, 7) de la vitre (2 ; 12, 18).

2. Appareil ménager (1 ; 11) selon la revendication 1, **caractérisé en ce que** la vitre (2 ; 12, 18) est une fenêtre de visualisation (18) d'une porte de four (17).

3. Appareil ménager (1 ; 11) selon l'une quelconque des revendications précédentes, **caractérisé en ce que** la vitre (2 ; 12, 18) est une vitre de recouvrement (2 ; 12) d'un bandeau de commande (22) de l'appareil ménager (1 ; 11).

4. Appareil ménager (1 ; 11) selon la revendication 3, **caractérisé en ce que** la vitre (2 ; 12) est une surface de commande (30) d'un écran tactile du bandeau de commande (22).

5. Appareil ménager (1 ; 11) selon l'une quelconque des revendications précédentes, **caractérisé en ce que** l'au moins une section (3) du côté étroit de la vitre (2 ; 12, 18), ménagée pour le rayonnement de la lumière (L), est recouverte au moyen d'un cadre décoratif (8).

6. Appareil ménager (1 ; 11) selon la revendication 2, **caractérisé en ce que** le côté étroit de la vitre (2 ; 12, 18), ménagé pour le rayonnement de la lumière (L), correspond à une section latérale totale de la vitre (2 ; 12, 18).

7. Appareil ménager (1 ; 11) selon la revendication 3, **caractérisé en ce que** le côté étroit de la vitre (2 ; 12, 18), ménagé pour le rayonnement de la lumière (L), correspond à un côté étroit inférieur de la vitre (2 ; 12, 18) et **en ce que** le côté étroit de la vitre (2 ; 12, 18), ménagé pour le rayonnement de la lumière (L), correspond à un côté étroit supérieur de la vitre (2 ; 12, 18) d'un côté étroit côté gauche et d'un côté étroit côté droit de la vitre (2 ; 12, 18).

8. Appareil ménager (11) selon l'une quelconque des revendications précédentes, **caractérisé en ce que** la section (13, 23, 24, 28, 32 -34) du côté étroit de la vitre (2 ; 12, 18), ménagée pour le rayonnement de la lumière (L), est inclinée au moins en partie dans une direction frontale.

9. Appareil ménager (1 ; 11) selon l'une quelconque des revendications précédentes, **caractérisé en ce que** la section (5; 13, 23, 24, 28, 32 -34) ménagée pour le rayonnement de la lumière (L) est réalisée au moins en partie pour renforcer une sortie de lumière.

10. Appareil ménager (1 ; 11) selon l'une quelconque des revendications précédentes, **caractérisé en ce que** la vitre (2 ; 12, 18) présente au moins un centre de diffusion (29) localisé, lequel est visible côté frontal en tant qu'un signe.

11. Appareil ménager (1 ; 11) selon l'une quelconque des revendications précédentes, **caractérisé en ce que** l'au moins une source lumineuse (4) présente au moins une source lumineuse à semi-conducteur.

12. Appareil ménager (1 ; 11) selon l'une quelconque des revendications précédentes, **caractérisé en ce que** l'au moins une source lumineuse (4) est conçue pour rayonner de la lumière (L) de couleur différente dans la vitre (2 ; 12, 18).

13. Appareil ménager (1 ; 11) selon la revendication 12, **caractérisé en ce que** l'appareil ménager (1 ; 11) est configuré pour rayonner de la lumière (L) dans la vitre (2 ; 12, 18) au moyen de l'au moins une source lumineuse (4), laquelle lumière (L) présente une couleur réglée en fonction d'un état de l'appareil ménager (1 ; 11).

14. Appareil ménager (1 ; 11) selon la revendication 13, **caractérisé en ce que** l'état de l'appareil ménager (1 ; 11) est une température (T) du four.
